# EUROPÄISCHE PATENTANMELDUNG

(11) **EP 0 995 850 A1**
(43) Veröffentlichungstag der Anmeldung: **26.04.2000**
(21) Anmeldenummer: 98119987.0
(22) Anmeldetag: 22.10.1998
(51) Int. Cl.: E04B 1/41, F16C 11/06

(54) **Anker zum Verbinden von zwei relativ zueinander beweglichen Bauteilen**

(71) Anmelder: Murinox AG, 3775 Lenk im Simmental (CH)
(72) Erfinder: Zeller, Walter, 5430 Wettingen (CH)
(74) Vertreter: Schmauder, Klaus Dieter

(57) **Zusammenfassung**

Der Anker zum Verbinden von zwei relativ zueinander beweglichen Bauteilen weist zwei Verankerungsgliedern (2) auf, die kugelgelenkig mit einem als Ausgleichsteil dienenden Verbindungsglied (4) verbunden sind. Das Verbindungsglied (4) weist ein Rohrstück (12) auf, welches an jedem Ende (14) mit einer Bördelung (16) sowie mit einer in einem Abstand von dieser angeordneten umlaufenden Einkerbung (18) versehen ist, welche durch Rollpressen gebildet sind. Die Innenfläche (20) des Rohrstückes (12) zwischen dem Ende (14) und der Einkerbung (18) ist als Kugelgelenkpfanne (10) ausgebildet.

## Beschreibung

### Technisches Gebiet

Die Erfindung betrifft einen Anker zum Verbinden von zwei relativ zueinander beweglichen Bauteilen gemäss dem Oberbegriff des Anspruches 1 sowie ein Verfahren zu seiner Herstellung.

### Stand der Technik

Anker der eingangs genannten Art sind mehrfach bekannt, so beispielsweise aus der Schweizer Patentschrift Nr. 576 562. Der dort beschriebene Anker weist zwei Verankerungsglieder auf, die kugelgelenkig mit einem als Ausgleichsteil dienenden Verbindungsglied verbunden sind. Die Verankerungsglieder sind zur Verankerung in den zu verbindenden Bauteilen, beispielsweise zum Einmauern in diese vorgesehen. Das Verbindungsglied ist aus einem Rohrstück gebildet, welches an jedem Ende eine Bördelung aufweist, die einen ringförmigen Anschlag in Zugrichtung für einen am entsprechenden Verankerungsglied ausgebildeten Kugelgelenkkopf darstellt. Eine im Innern des Rohrstückes angeordnete Stützvorrichtung ist mit konkaven Endflächen ausgestattet, welche hohlkugelartige Pfannen für die Gelenkköpfe der Verankerungsglieder bilden und dadurch Anschläge in Druckrichtung darstellen.

Ein solcher Anker hat verschiedene Nachteile. Die erforderliche Stützvorrichtung trägt wesentlich zum Materialbedarf und Gewicht des Ankers bei. Der Herstellungsaufwand und die Herstellungskosten werden dadurch erhöht, dass die Stützvorrichtung mit hohlkugelartigen Endflächen ausgestattet sein muss. Die Bördelung an den Enden des Verbindungsgliedes des bekannten Ankers wird in einem aufwendigen Pressverfahren hergestellt, wobei grosse Pressvorrichtungen mit hohen Presskräften von beispielsweise 110 Kilonewton benötigt werden.

### Darstellung der Erfindung

Aufgabe der Erfindung ist es, bei einem Anker der eingangs genannten Art die erwähnten Nachteile zu beseitigen und diese entsprechend zu verbessern.

Diese Aufgabe wird erfindungsgemäss gelöst durch den im Anspruch 1 definierten Anker sowie durch das im Anspruch 4 definierte Verfahren zu dessen Herstellung.

Dadurch, dass das Rohrstück in einem Abstand eines jeden Endes eine umlaufende Einkerbung aufweist derart, dass die Innenfläche des Rohrstückes zwischen dem Ende und der Einkerbung als Kugelgelenkpfanne ausgebildet ist, erübrigt sich die Stützvorrichtung im Innern des Rohrstückes. Dadurch, dass die Bördelung und die Einkerbung durch Rollpressen des Rohrstückes gebildet sind, wird der Herstellungsvorgang wesentlich vereinfacht und damit auch kostengünstiger.

Vorteilhafte Ausgestaltungen des Ankers sind in den abhängigen Ansprüchen definiert.

Grundsätzlich kann der Anker aus verschiedenen Materialien, insbesondere Metallen bestehen. Die Ausgestaltung nach Anspruch 2 zeichnet sich durch eine gute Zug- und Druckfestigkeit aus und ist überdies korrosionsbeständig.

Bei der Ausgestaltung nach Anspruch 3 sind die Verankerungsglieder bei unbelastetem Anker koaxial ausgerichtet, wodurch der Einbau des Ankers in einer neutralen Ausgangsstellung erleichtert wird. Darüber hinaus wird der Eintritt von Wasser, Zementrückständen und dergleichen in das Innere des Ankers verhindert.

### Kurze Beschreibung der Zeichnungen

Ausführungsbeispiele des erfindungsgemässen Ankers werden nachfolgend anhand der Zeichnungen näher beschrieben, dabei zeigen:
- Figur 1: einen Anker in ausgelenkter Stellung, teilweise geschnitten und mit einendig abgenommener Kunststoffhülle; und
- Figur 2: einen Ausschnitt eines Ankers mit Teilen von Halterungsvorrichtungen und Ausschnitten von Pressrollen, im Längsschnitt.

### Wege zur Ausführung der Erfindung

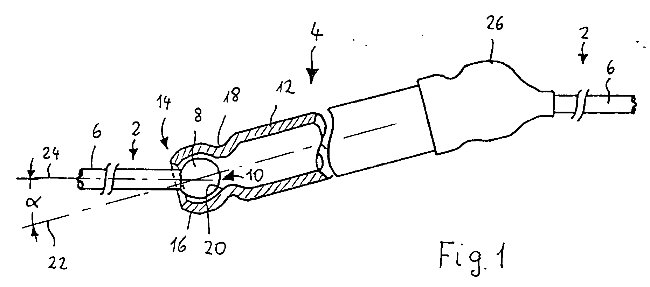

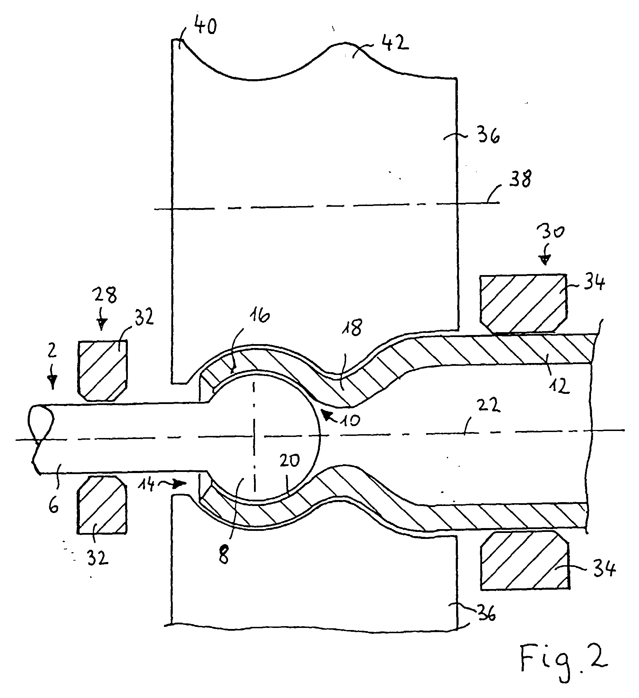

Der in den Figuren 1 und 2 dargestellte Anker entält zwei Verankerungsglieder 2 und ein als Ausgleichsteil dienendes Verbindungsglied 4, mit welchem die Verankerungsglieder 2 kugelgelenkig verbunden sind. Jedes Verankerungsglied 2 weist einen Schaft 6 zum Einmauern oder andersweitigem Fixieren an einem Bauteil sowie einen Kugelgelenkkopf 8 auf, der in einer zugeordneten Kugelgelenkpfanne 10 des Verbindungsgliedes 4 aufgenommen ist. Das Verbindungsglied 4 ist aus einem Rohrstück 12 gebildet, welches an jedem Ende 14 mit einer Bördelung 16 sowie mit einer im Abstand zu dieser angeordneten umlaufenden Einkerbung 18 versehen ist. Die Bördelung 16 und die Einkerbung 18 sind durch Rollpressen gebildet derart, dass die Innenfläche 20 des Rohrstückes 12 zwischen dem Rohrende 14 und der Einkerbung 18 als Kugelgelenkpfanne 10 ausgebildet ist. Wie aus den Figuren ersichtlich ist, hat die Gelenkpfanne 10 im wesentlichen die Form einer Kugelzone.

Wie insbesondere aus der Figur 1 hervorgeht, lässt sich der Winkel α zwischen der Längsachse 22 des Verbindungsgliedes 4 und der Längsachse 24 eines Verankerungsgliedes 2 in einem Bereich verändern, der durch einen Anschlag des Schaftes 6 an dem Rohrende 14 begrenzt ist. Der Grenzwert des Winkels α ergibt sich im wesentlichen aus der Länge der Bördelung 16 und dem Aussendurchmesser des Schaftes 6 und beträgt beispielsweise 15 Grad.

In einer bevorzugten Ausgestaltung des Ankers sind die Verankerungsglieder 2 und das Rohrstück 12 aus Stahl, insbesondere aus nichtrostendem Edelstahl gefertigt. Beispielsweise weist das Rohrstück 12 einen Aussendurchmesser von 14 mm und eine Wandstärke von 2 mm auf, während der Schaft 6 und der Kugelgelenkkopf 8 des Verankerungsgliedes 2 einen Aussendurchmesser von 5,24 mm bzw. 9 mm aufweisen.

In einer weiteren Ausgestaltung gemäss der Figur 2 weist der Anker eine über jedem Ende des Verbindungsglieds 4 und dem angrenzenden Teil des entsprechenden Verankerungsgliedes 2 anliegende Kunststoffhülle 26 auf, die vorzugsweise aus einem kautschukelastischen Material besteht. Die Kunststoffhülle wird aufgeschrumpft oder aufgespritzt, und sie kann auch als eine einzige, über den gesamten Verbindungsteil 4 verlaufende Hülle ausgebildet sein. Beim Auslenken der Verankerungsglieder 2 wird die Kunststoffhülle 26 gedehnt und übt dabei ein Rückstellungsmoment aus, welches die koaxiale Ausrichtung der Verankerungsglieder 2 bei unbelastetem Anker bewirkt.

Das Verfahren zur Herstellung des erfindungsgemässen Ankers beruht auf einem Rollpressverfahren. Zunächst wird der Kugelgelenkkopf 8 eines Verankerungsgliedes 2 in das eine Ende 14 des Rohrstückes 12 eingeführt, wobei Verankerungsglied 2 und Rohrstück 12 mittels Halterungsvorrichtungen 28 bzw. 30 einer Rollpressvorrichtung koaxial und bezüglich der Längsrichtung des Rohrstückes 12 in einer gewünschten Stellung fixiert werden. Wie aus der Figur 2 hervorgeht, beinhalten die Halterungsvorrichtungen 28 und 30 Halterungsbacken 32 und 34. Anschliessend wird durch Anpressen von Pressrollen 36 gegen das Rohrstück 12 in Querrichtung zur Längsachse 22 die Bördelung 16 sowie die umlaufende Einkerbung 18 gebildet, wobei die Innenfläche 20 die Form der Kugelgelenkpfanne 10 annimmt. In einem weiteren Schritt wird das Verfahren in analoger Weise mit dem zweiten Verankerungsglied an dem zweiten Ende des Rohrstückes 12 durchgeführt. Alternativ können mittels einer entsprechend ausgestalteten Rollenpresse beide Rohrenden gleichzeitig bearbeitet werden.

Entsprechend den gebräuchlichen Rollpressverfahren wird während des Pressvorganges das Rohrstück 12 gegenüber den Pressrollen 36 um die Längsachse 22 gedreht, wobei dies entweder über einen Drehung des Rohrstückes 12 oder über eine Drehung der Achsen 38 der Pressrollen 36 um die Längsachse 22 des Rohrstückes 12 bewerkstelligt wird. Um das Rohrstück 12 mit der gewünschten Form zu versehen, weisen die Pressrollen 36 eine entsprechend geformte Mantelfläche auf, wobei Wülste 40 und 42 der Bördelung 16 bzw. der Einkerbung 18 entsprechen.

### BEZUGSZEICHENLISTE

- 2: Verankerungsglieder
- 4: Verbindungsglied
- 6: Schaft von 2
- 8: Kugelgelenkkopf von 2
- 10: Kugelgelenkpfanne von 4
- 12: Rohrstück
- 14: Ende von 12
- 16: Bördelung von 12
- 18: Einkerbung von 12
- 20: Innenfläche von 12
- 22: Längsachse von 4
- 24: Längsachse von 2
- 26: Kunststoffhülle
- 28: Halterungsvorrichtung für 2
- 30: Halterungsvorrichtung für 4
- 32: Halterungsbacken von 28
- 34: Halterungsbacken von 30
- 36: Pressrollen
- 38: Achse von 36
- 40: Wulst von 36
- 42: Wulst von 36
- α: Winkel zwischen 22 und 24

## Patentansprüche

1. Anker zum Verbinden von zwei relativ zueinander beweglichen Bauteilen, mit zwei Verankerungsgliedern (2), die kugelgelenkig mit einem als Ausgleichsteil dienenden Verbindungsglied (4) verbunden sind, wobei das Verbindungsglied (4) ein Rohrstück (12) aufweist, welches an jedem Ende (14) mit einer Bördelung (16) versehen ist, dadurch gekennzeichnet, dass das Rohrstück (12) in einem Abstand eines jeden Endes (14) eine umlaufende Einkerbung (18) aufweist derart, dass die Innenfläche (20) des Rohrstückes (12) zwischen dem Ende (14) und der Einkerbung (18) als Kugelgelenkpfanne (10) ausgebildet ist, wobei die Bördelung (16) und die Einkerbung (18) durch Rollpressen gebildet sind.

2. Anker nach Anspruch 1, dadurch gekennzeichnet, dass die Verankerungaglieder (2) und/oder das Verbindungsglied (4) aus nichtrostendem Stahl bestehen.

3. Anker nach Anspruch 1 oder 2, dadurch gekennzeichnet, dass er je eine, über einem Ende (14) des Verbindungsglieds (4) und dem angrenzenden Teil des entsprechenden Verankerungsgliedes (2) anliegende, vorzugsweise aufgeschrumpfte und/oder kautschukelastische Kunststoffhülle (26) aufweist, um die Verankerungsglieder (2) bei unbelastetem Anker koaxial auszurichten.

4. Verfahren zur Herstellung des Ankers nach Anspruch 1, dadurch gekennzeichnet, dass der Kugelgelenkkopf (8) eines Verankerungsgliedes (2) in das Ende (14) eines Rohrstückes (12) eingeführt wird, das Verankerungsglied (2) und das Rohrstück (12) mittels Halterungsvorrichtungen (28, 30) koaxial und bezüglich der Längsrichtung des Rohrstückes (12) in einer gewünschten Stellung fixiert werden und anschliessend durch Rollpressen des Rohrstückes (12) an dessen Ende (14) eine Bördelung (16) sowie eine umlaufende Einkerbung (18) gebildet werden derart, dass die Innenfläche (20) des Rohrstückes (12) zwischen den Ende (14) und der Einkerbung (18) eine den Kugelgelenkkopf (8) unschliessende Kugelgelenkpfanne (10) bildet.
